# EUROPEAN PATENT APPLICATION

(11) **EP 4 383 297 A1**
(43) Date of publication of application: **12.06.2024**
(21) Application number: 22852584.6
(22) Date of filing: 23.03.2022
(51) Int. Cl.: H01G 11/10, H01G 11/74, H01M 50/209, H01M 50/503, H01M 50/51, H01M 50/522, H01M 50/526, H01M 50/55, H01M 50/569

(54) **BATTERY PACK**

(30) Priority: 05.08.2021 JP 2021129040
(71) Applicant: Vehicle Energy Japan Inc., Ibaraki 312-8505 (JP)
(72) Inventor: ODA, Masanari, Hitachinaka-shi, Ibaraki 312-8505 (JP); KUBOTA, Osamu, Hitachinaka-shi, Ibaraki 312-8505 (JP); KOSAI, Koji, Hitachinaka-shi, Ibaraki 312-8505 (JP); AIZAWA, Yasuyuki, Hitachinaka-shi, Ibaraki 312-8505 (JP); KAWASAKI, Tatsuhiko, Hitachinaka-shi, Ibaraki 312-8505 (JP); TAKAMORI, Yoshiyuki, Hitachinaka-shi, Ibaraki 312-8505 (JP)
(74) Representative: Strehl Schübel-Hopf & Partner
(86) International application number: PCT/JP2022/013727
(87) International publication number: WO 2023/013155

(57) **Abstract**

The present invention relates to a battery pack that uses bus bars, and is provided for overcoming a drawback that, in a case where straight-line distance between terminals of batteries disposed adjacently to each other is short, an overlapping area of the bus bars in a planar direction becomes narrow so that a joining strength cannot be increased. In the bus bar that connects a first positive electrode terminal of the first battery and a second negative electrode terminal of the second battery that are disposed adjacently to each other, a first conductive member of the bus bar includes a first joining portion joined to the first positive electrode terminal and a first extending portion extending from the first joining portion, a second conductive member of the bus bar includes a second joining portion joined to the second negative electrode terminal and a second extending portion extending from the second joining portion, the first conductive member and the second conductive member are made of materials that differ from each other, the first conductive member and the second conductive member are connected to each other by a third joining portion, and the third joining portion is formed on an overlapping portion of the first extending portion and the second extending portion with a distance closer to the third joining portion out of a distance between the first joining portion and the third joining portion and a distance between the second joining portion and the third joining portion.

## Description

### Technical Field

The present invention relates to a bus bar for a battery pack and a battery pack.

### Background Art

In a battery pack that includes a plurality of secondary batteries such as lithium ion secondary batteries, positive and negative electrodes of the secondary batteries disposed adjacently to each other are connected to each other by a connecting member made of metal referred to as a bus bar. The bus bar is a flat-plate-shaped member made of metal such as aluminum, copper or iron. The bus bar is assembled to the positive and negative electrodes of the secondary batteries by bonding such as laser welding, ultrasonic welding or the like, or by using a fastening member.

With respect to the respective secondary batteries that form the battery pack, due to vibrations or the like that are generated during an assembling operation, or during transportation, there is a case where a relative distance between the secondary battery cells is changed to an undesired positional relationship. Further, there may be also a case where a relative distance between secondary batteries is changed due to the supply of electricity and expansion or shrinkage of the battery. Accordingly, a stress is generated in the bus bar or the positive and negative electrodes of the secondary battery, and there is a concern that a fatigue rupture occurs in these components.

To alleviate the stress generated in the bus bar or the secondary battery, there has been known a technique where a stress alleviating portion that protrudes in a U shape is formed on an intermediate portion of the bus bar in the length direction by bending a flat plate in the direction perpendicular to the thickness direction by a press. With such a structure, it is considered that, when the bus bar is thermally expanded, the stress alleviating portion is deformed so that a load transmitted to the positive and negative electrodes of the secondary battery can be reduced. Further, in such a structure, there has been also known a structure where a stress alleviating portion formed in a U shape is formed as a twisted portion where the stress alleviating portion is twisted by approximately 90° with respect to the thickness direction of the flat plate (for example, see patent literature 1). However, against a load applied in the direction perpendicular to the thickness direction, the stress alleviating portion has substantially no effect of alleviating a stress. Even in a case where the stress alleviating portion is formed as the twisted portion where the stress alleviating portion is twisted by approximately 90° with respect to the thickness direction of the flat plate, the rigidity of the twisted portion is large and hence, basically, such a bus bar is substantially equal to the bus bar having no twisted portion and hence, against a load applied in a direction perpendicular to the thickness direction, an effect of alleviating a stress cannot be expected.

On the other hand, in patent literature 2, as a bus bar that acquires a stress alleviating effect, a bus bar for a battery pack having the following configuration is disclosed. That is, a first mounting face 11 and a second mounting face 12 are disposed parallel to each other in an XY plane, a first raised face 13 and a second raised face 14 are disposed parallel to a YZ plane or in an inclined manner with respect to the YZ plane, a connecting face 15 is disposed parallel to an XZ plane or in an inclined manner with respect to the XZ plane, the second raised face is disposed in parallel to a YZ plane or an inclined manner with respect to the YZ plane from a side portion of the second mounting face on the same side as the first mounting face in an X direction, the connecting face has a recessed portion having a U-shaped cross section and bent in a direction that intersects with a Y direction, a first curved portion or inclined portion is formed between the first mounting face and the first raised face, and a second curved portion or an inclined portion is formed between the second mounting face and the second raised face.

### Citation List

### Patent Literature

PTL 1: Japanese Unexamined Patent Application Publication No. 2007-73266
PTL 2: Japanese Unexamined Patent Application Publication No. 2017-73398

### Summary of Invention

### Technical Problem

The present invention relates to a bus bar that is manufactured using an ultrasonic welding (USW) out of joining modes of a type where a plurality of metal plates are stacked in a thickness direction of the plates and are joined to each other, and a battery pack formed by using the bus bars. In the USW, a large-sized apparatus is not required and hence, compared to pressure welding and FSW welding, it is possible to manufacture USW welding bus bars at a low cost. However, as described above, in these welding modes, it is necessary to form welding portions in a region where a plurality of plates overlap with each other and hence, there exists a drawback that an upper limit of a welding strength is determined by a size of the plates of an overlapping area in a planar direction.

The bus bar is disposed in a state where the bus bar mediates between positive and negative electrode terminals of batteries disposed adjacently to each other. In general, the bus bar that is connected between positive and negative electrode terminals has an approximately flat plate shape. However, in a case where a USW bus bar is manufactured in an approximately flat plate shape, particularly, in a case where a straight-line distance between the terminals is short, overlapping areas on the plates in a planar direction is narrow and hence, there is a drawback that a defect relating to a joining strength is liable to occur.

### Solution to Problem

In the present invention, to overcome the above-mentioned problems, a bus bar having a shape where an overlapping area of metal plates to be joined to each other in a one-side-surface direction is increased is used. According to a first aspect of the present invention, while imparting a stereoscopic structure that alleviates a stress, as a method of ensuring a joining strength of a joining surface, a first member and a second member are made to overlap with each other, overlapping portions are joined to each other by ultrasonic welding thus increasing a joining area and increasing a likelihood of a joining strength. Accordingly, a risk of a fatigue rupture of the bus bar disposed in the battery pack can be lowered.

Specifically, the present invention uses an battery pack that includes: a plurality of stacked unit batteries each has a positive electrode terminal and a negative electrode terminal; and a bus bar that connects a positive electrode terminal of the first unit battery and a negative electrode terminal of the second unit battery, wherein the bus bar includes: a positive electrode side conductive member that is joined to the positive electrode terminal of the first unit battery and a negative electrode side conductive member that is joined to the negative electrode terminal of the second unit battery disposed adjacently to the first unit battery, the positive electrode terminal and the positive electrode side conductive member are made of a material different from a material of the negative electrode terminal and the negative electrode side conductive member, the positive electrode side conductive member has a first joining portion that is joined to the positive electrode terminal and a first extending portion extending from the first joining portion, the negative electrode side conductive member has a second joining portion that is joined to the negative electrode terminal and a second extending portion extending from the second joining portion and extending on the same side as the first extending portion with respect to an imaginary line that passes the first joining portion and the second joining portion, the bus bar has a third joining portion to which the first extending portion and the second extending portion are connected, an end portion of the positive electrode side conductive member is disposed in a spaced-apart manner from an end portion of the negative electrode side conductive member that opposedly faces the positive electrode side conductive member with respect to the imaginary line that connects the first joining portion and the second joining portion as viewed in a direction that the bus bar overlaps with the unit batteries, and the third joining portion is a region to which one of a distance from the first joining portion to the third joining portion and a distance from the second joining portion to the third joining portion is closer to the third joining portion than the other distance and is formed on an overlapping portion where the first extending portion and the second extending portion are made to overlap with each other.

### Advantageous Effects of Invention

With the use of the bus bar according to the present invention, the bus bar can be deformed in directions different from each other three-dimensionally. Accordingly, the bus bar can exhibit a stress alleviation effect to a load from any direction. Further, the bus bar has characteristic that a joining area of the overlapping plates in the planar direction is large and hence, a strength of the joining surface against a stress can be sufficiently increased. Accordingly, it is possible to provide the battery pack where the bus bar has a small risk of fatigue rupture.

### Brief Description of Drawings

Fig. 1 is an exploded perspective view of a battery pack according to the present invention.
Fig. 2 is a perspective view of the bus bar according to an embodiment 1.
Fig. 3 is an exploded perspective view of the bus bar according to the embodiment 1.
Fig. 4 is a perspective view of a bus bar according to a comparison example.
Fig. 5 is a perspective view of a bus bar according to an embodiment 2.
Fig. 6 is an exploded perspective view of the bus bar according to the embodiment 2.
Fig. 7 is a perspective view of a bus bar according to an embodiment 3.
Fig. 8 is an exploded perspective view of the bus bar according to the embodiment 3.
Fig. 9 is a perspective view of a bus bar according to an embodiment 4.
Fig. 10 is a perspective view of a bus bar according to an embodiment 5.
Fig. 11 is a perspective view of a bus bar according to an embodiment 6.
Fig. 12 is a perspective view of a bus bar according to an embodiment 7.
Fig. 13 is a perspective view of a bus bar according to an embodiment 8.
Fig. 14 is a perspective view of a bus bar according to an embodiment 9.
Fig. 15 is a perspective view of a bus bar according to an embodiment 10.

### Description of Embodiments

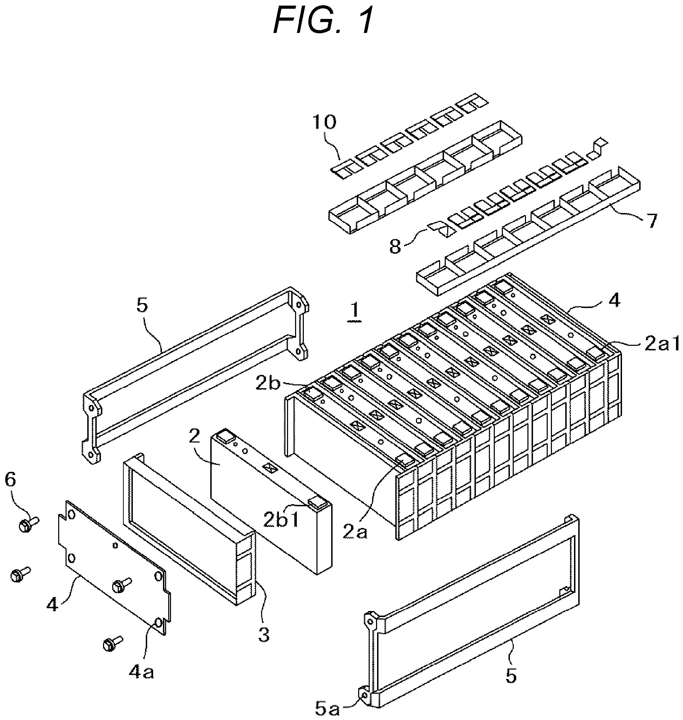

Hereinafter, an example of a bus bar for a battery pack and a battery pack according to the present invention is described with reference to drawings. Fig. 1 is an exploded perspective view illustrating one example of a battery pack to which the present invention is applied. As illustrated in Fig. 1, a battery pack 1 has a structure where a large number of unit batteries 2 are fixed by a pair of end plates 4 and a pair of side plates 5. The unit battery 2 is, for example, an angular secondary battery such as a lithium ion secondary battery.

The angular unit battery 2 is formed into a rectangular parallelepiped shape, and has an upper surface and a lower surface, a pair of flat surfaces having a large area, and a pair of side surfaces having a small area. With respect to the size of the unit battery 2, for example, the unit battery 2 has a large length of 12 cm, a short length of 1.2 cm and a height of 6.5 cm. However, such a size is only one example, and the unit battery can take various sizes. The unit batteries 2 are arranged in a row in a state where the flat surfaces having the large area opposedly face each other, and a holder 3 is interposed between the respective unit batteries 2, in front of the leading unit battery 2 in the row, and behind the trailing unit battery 2 in the row.

The unit battery 2 includes a positive electrode 2a and a negative electrode 2b on an upper portion side, and all unit batteries 2 have the same size, the same shape and the same structure. The unit batteries 2 disposed adjacently to each other are arranged in a state where the positive electrode 2a and the negative electrode 2b opposedly face each other. In other words, the unit batteries 2 disposed adjacently to each other are arranged in a state where the flat surfaces on front and rear sides are alternately reversed. The positive electrode 2a is formed using aluminum-based metal such as aluminum or an aluminum alloy, for example. The negative electrode 2b is formed using copper-based metal such as copper or a copper alloy, for example.

End plates 4 are disposed in front of the leading holder 3 in the row and behind the trailing holder 3 in the row. The pair of end plates 4 is formed using a metal material, has a substantially a rectangular shape. An opening portion 4a through which a bolt 6 is inserted is formed in four corner portions. On sides of the unit batteries 2 that are arranged in the row, a pair of side plates 5 is disposed. Each side plate 5 is a rectangular frame body having diameter portions that are disposed in a vertically spaced-apart manner, and a connecting portion that connects the diameter portions. An opening portion 5a that corresponds to an opening portion 4a of the end plate 4 is formed in the respective corner portions of the frame body.

The battery pack 1 is formed such that the end plate 4 disposed on a row leading side and the end plate 4 on a row rear side are arranged inside the front and rear connecting portions of the respective side plates 5, and the end plates 4 are fixed to each other by fastening by inserting bolts 6 into the opening portions 5a formed in the side plate 5 and the opening portions 4a formed in the end plate 4. The bolts 6 are fastened by making the bolts 6 threadedly engage with threaded holes (not illustrated in the drawing) formed in the holder 3, or disposing nuts (not illustrated in the drawing) on a rear surface side of the end plate 4. Fixing by rivets may be adopted in place of fastening by the bolts 6.

On an upper portion side of the respective unit batteries 2, an insulation cover 7 is disposed such that the insulation cover 7 surrounds the positive and negative electrodes 2a, 2b of the unit batteries 2 arranged in a row. The positive electrode 2a and the negative electrode 2b of the unit batteries 2 disposed adjacently to each other are connected by a bus bar 10. All unit batteries 2 are connected to each other in series by the bus bars 10. To the positive electrode 2a1 of the leading unit battery 2 in the row and the negative electrode 2b1 of the trailing unit battery 2 in the row, end bus bars 8 are connected. The bus bars 10 or the end bus bars 8 and the positive and negative electrodes 2a, 2b are joined to each other by welding such as laser welding, ultrasonic welding, or the like. The structure that enables the connection by fastening using screws may be adopted in place of welding.

The bus bars 10 disposed on one side of the insulation cover 7 formed of one continuous member have substantially the same shape and the same structure. The bus bars 10 disposed on the other side of the insulation cover formed of one continuous member have the shape that are substantially in mirror symmetry with the shape of the bus bars 10 disposed on one side of the insulation cover 7. The end bus bars 8 have mounting surfaces that are connected to one side of the positive and negative electrodes 2a, 2b of the unit battery 2, and through holes for fastening by machine screws are formed on end portions of the positive and negative electrodes 2a, 2b on a side opposite to the mounting surfaces. The present invention is characterized by the structure of the bus bar 10, and one embodiment of the bus bar 10 is described hereinafter.

### Embodiment 1

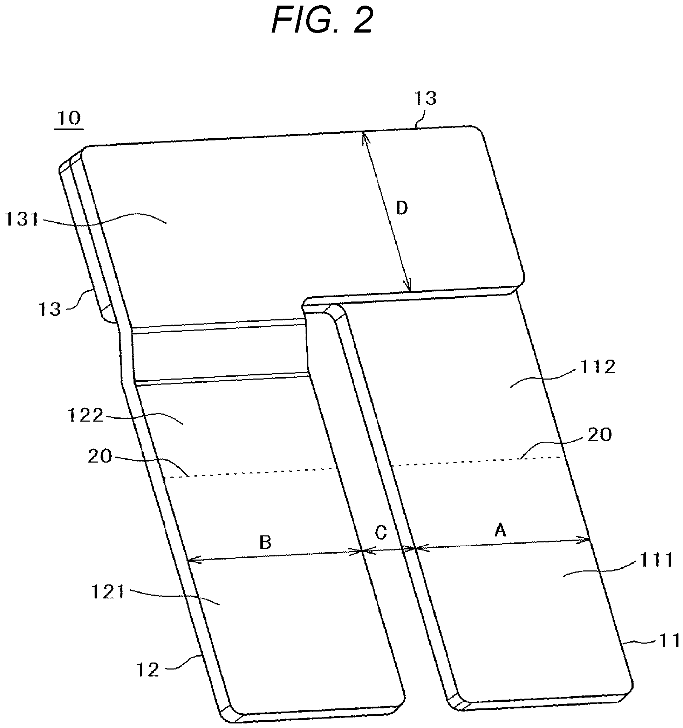

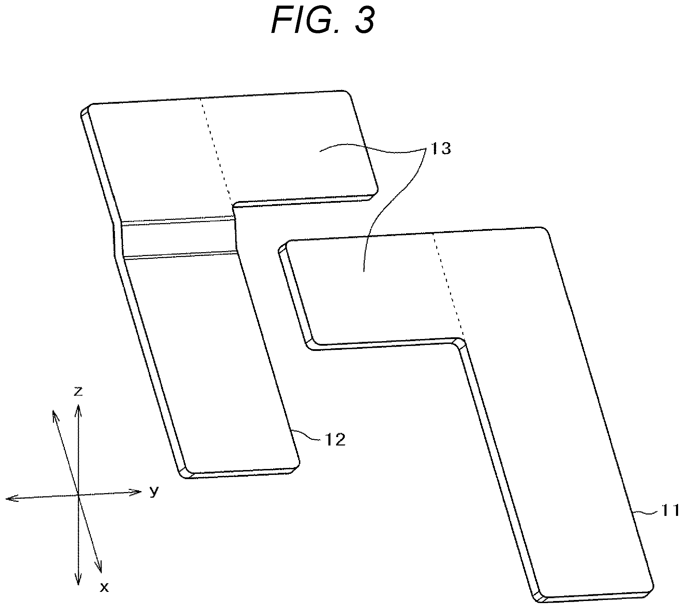

Fig.2 is a perspective view of an external appearance of the bus bar 10 for a battery pack according to the embodiment 1 illustrated in Fig.1, and Fig.3 is an exploded perspective view of the bus bar 10 for a battery pack. The bus bar 10 includes: a first plate 11 formed by applying press working to a sheet of plate made of metal such as aluminum-based metal including aluminum, an aluminum alloy or the like, copper-based metal including copper, a copper alloy or the like, iron or the like; a second plate 12 formed by applying press working to a sheet of plate made of a material different from the material of the first plate 11, that is, a metal such as aluminum-based metal including aluminum, an aluminum alloy or the like, copper-based metal including copper, a copper alloy or the like, iron or the like. In the description made hereinafter, the X direction, the Y direction perpendicular to the X direction and the Z direction perpendicular to the X direction and the Y direction are the directions illustrated in Fig.3.

The bus bar 10 is formed of: the first plate 11 that is a positive electrode side conductive member joined to a positive electrode terminal 2a of the first unit battery; and a second plate 12 that is a negative electrode side conductive member joined to the negative electrode terminal 2b of the second unit battery positioned adjacently to the first unit battery. The first plate 11 that is the positive electrode side conductive member has: a first joining portion 111 that is joined to the positive electrode terminal 2a; and a first extending portion 112 that extends from the first joining portion 111.

On the other hand, the second plate 12 that is the negative electrode side conductive member has: a second joining portion 121 that is joined to the negative electrode terminal 2b, and a second extending portion 122 that extends from the second joining portion 121 such that the second extending portion 122 extends on the same side as the first extending portion 112 with respect to an imaginary line that passes the first joining portion 111 and the second joining portion 121.

In addition to these portions, the bus bar 10 includes a third extending portion 13 that extends from at least either one of the first extending portion 111 and the second extending portion 121, that is, from an end portion of the extending portion 112 or 122. The third extending portion 13 has a third joining portion 131 which extends approximately parallel to the direction along which the unit batteries 2 described above overlap with each other, and to which at least a portion of the other extending portion 112 or 122 is joined by ultrasonic welding. The third joining portion 131 exists at a position in a direction perpendicular to and spaced apart from an imaginary line that connects the first joining portion 111 and the second joining portion 121. Further, the end portion of the first plate 11 that is the positive electrode side conductive member and the end portion of the second plate 12 that is the negative electrode side conductive member are positioned in a spaced-apart manner from each other. That is, the end portion of the first plate 11 and the end portion of the second plate 12 do not butt against each other. Further, the bus bar 10 is configured such that either one of a distance between the third joining portion 131 and the first joining portion 111 and a distance between the third joining portion 131 and the second joining portion 121 is set shorter than the other distance.

The reason that the bus bar 10 having such a shape is used is that portions of the bus bar 10 disposed above the terminals are required to possess flatness. That is, in a case where the portions of the bus bar 10 disposed above the terminals are not flat, in a case where the terminals and the bus bar are joined to each other in the succeeding steps, there is a possibility that pressing becomes insufficient at the time of performing joining or a failure in joining is liable to occur. On the other hand, in the USW (Ultrasonic welding) joining, a joining mark unique to the USW joining is generated. As a result, there exists a drawback that an upper surface and a lower surface of the bus bar are not flat. To the contrary, in a case where the bus bar 10 according to the present invention is used, the present invention acquires an advantageous effect that areas necessary for joining the first plate 11 and the second plate 12 can be largely increased while maintaining the flatness of the portions of the bus bar disposed above the terminals. Accordingly, it is possible to increase a joining strength of the first plate 11 and the second plate 12 with the terminals.

That is, in the simple overlapping structure, in a case where a third joining portion is used above or below a plane for connecting the positive electrode terminal and the negative electrode terminal, the flatness described above is required, there exists a drawback that it is necessary to make the joining areas small. To the contrary, with the use of the bus bar 10 according to the present invention, it is possible to overcome this drawback. With the use of the bus bar 10 according to the present invention, no joining mark is formed on the portions of the bus bar 10 above the terminals and hence, it is possible to acquire large joining areas.

To calculate the joining area that can be specifically adopted in this embodiment, the calculation can be made as follows. In the calculation, the area of the plate in a planar direction is described. That is, assume a width of the first plate 11 as A, a width of the second plate 12 as B, a distance between the first plate 11 and the second plate 12 as C, and a width of the third extending portions as D. In this case, in the bus bar according to the present invention, a maximum area S1 that allows ultrasonic welding can be expressed by an expression S1 = (A + B + C) × D. As an example of A, B, C and D, A is 1 cm, B is 1 cm, C is 5 mm, and D is 2 mm to 10 mm. Further, a plate thickness of the first plate 11, the second plate 12 is preferably 0. 5 mm to 1. 5 mm, and more preferably 0.6 mm to 0.8 mm, for example.

However, the above-mentioned sizes are provided for an exemplifying purpose. Accordingly, the widths A, B, C, D are not particularly limited, and may be any sizes provided that these sizes are sizes that allow the bus bar 10 to be mounted in a module or a pack. Further, the joining surface can acquire an advantageous effect of the present invention regardless of an area and whatever place the bus bar 10 is disposed provided that the joining surface is a region where the extending portion and the other plate overlap with each other.

In such a configuration, a third extending portion 13 or a fourth extending portion that extends from end surfaces of both of the first extending portion 112 and the second extending portion 122 may be provided. Also in this case, the bus bar 10 has the maximum area S1 illustrated in figure 2. A voltage detection line may be mounted on a portion in the first extending portion 112, the third extending portion 131 and the second extending portion 122 of the bus bar 10 where a USW joining portion is not formed.

Out of at least one of the first plate 11 and the second plate 12 of the bus bar 10, nickel plating may be applied to a surface on which the first plate 11 and the second plate 12 are physically connected to each other. Nickle plating may be applied to both of the first plate 11 and the second plate 12. The surface to which nickel plating is applied may be only a portion of the surface on which the first plate 11 and second plate 12 are physically connected to each other, or may be the entirety of the surface on which the first plate 11 and the second plate 12 are physically connected to each other. Further, the surface to which nickel plating is applied may be only the surface where the first plate 11 and the second plate 12 are physically connected to each other, or may be applied to other surfaces of the plate.

By applying nickel plating to surfaces on which the first plate 11 and the second plate 12 are physically connected to each other, at the time of joining aluminum-based metal and copper-based metal to each other, a process margin of the joining can be increased. As a result, it is possible to increase a joining strength of the joining surface. Further, it is also possible to expect the suppression of corrosion of aluminum-based metal. A thickness of applied nickel plating is preferably 1µm or more and 100µm or less, more preferably 3µm or more and 50µm or less, and most preferably be 4µm or more and 10µm or less. By also increasing the thickness of nickel plating in this manner, it is possible to increase a process margin of USW joining. As the glossiness of nickel plating, glossless plating, a half glossing plating and glossing plating are considered. Any glossiness may be selected depending on a joining condition.

The glossiness can be measured using a glossmeter. More specifically, in the measurement of glossiness using the glossmeter, in a case where log (Iᵢₙ/Iₒᵤₜ) that is a logarithm of a reciprocal of a ratio between Iᵢₙ that is an intensity of an incident light from just above a plate surface and Iₒᵤₜ that is an intensity of a reflection light reflected in a direction inclined with respect to the incident light by 45 degrees is defined as glossiness, the glossiness is preferably 0.2 or more and 2.5 or less, more preferably 0.3 or more and 2.5 or less, and most preferably 0.6 or more and 2.5 or less. By also setting the glossiness within this range, it is possible to increase a process margin of USW joining.

A specific example of the combination according to the embodiment 1 is described. The first plate 11 may be made of pure aluminum and the second plate 12 may be made of an oxygen-free copper, and nickel plating is applied to a surface of the second plate 12. In this case, a thickness of the nickel plating may be set to 5 µm, and glossiness may be set to 2.0. As a nickel plating method, electroplating and electroless plating are named. In a case where USW joining can be performed, either method may be adopted. However, electroplating is preferable.

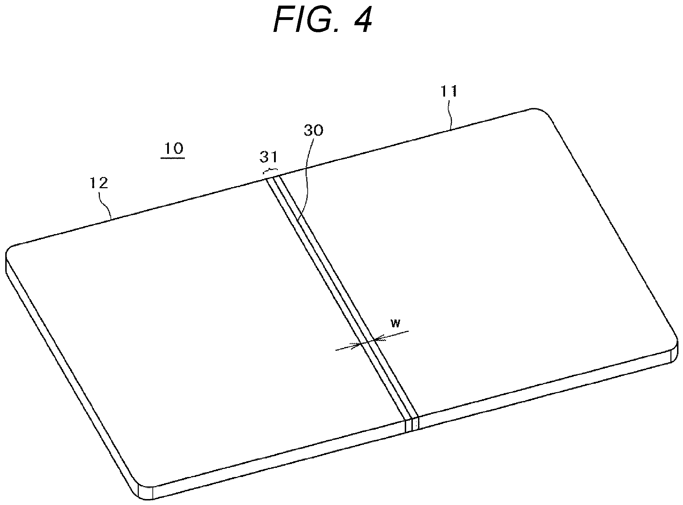

Fig. 4 is a perspective view illustrating a comparison example of the bus bar 10. In Fig. 4, a first plate 11 having a flat plate shape and a second plate 12 having a flat plate shape are joined to each other in a butting manner at end surfaces. Hereinafter, such a configuration is called as a flat-plate-shaped clad member. In Fig.4, the first plate 11 and the second plate are joined to each other at a joining surface 30. Using the joining surface 30 as the center, a mixed region 31 where a material for forming the first plate 11 and a material for forming the second plate are mixed to each other is formed over a width w in a planar direction of the plates. The width w is 1 mm, for example. In the configuration illustrated in the Fig.4, are pressed mark by USW does not exist and hence, it is possible to ensure reliability of connection at the positive electrode or the negative electrode. However, the flat-plate-shaped clad member illustrated in Fig. 4 has a drawback that a manufacturing cost is high.

### Embodiment 2

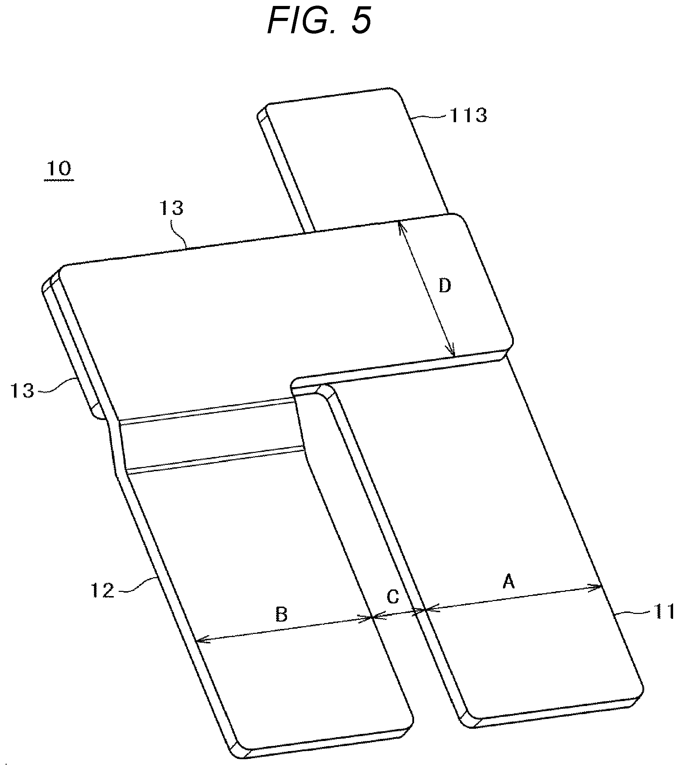

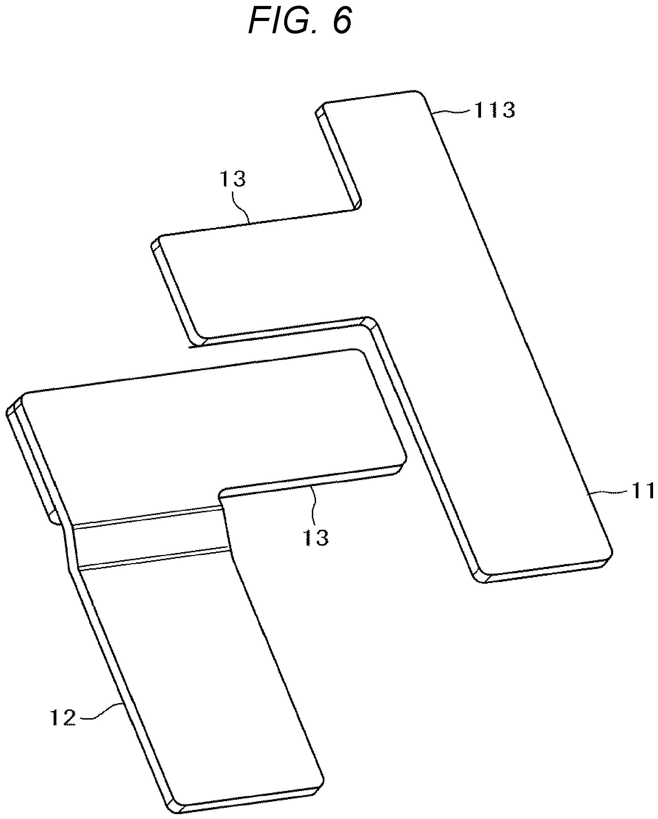

Fig.5 is a perspective view illustrating an embodiment 2. In the embodiment 2, compared to the embodiment 1, the configuration is adopted where a protrusion 113 for mounting a voltage detection line is formed on an end surface of an extending portion 112 that extends from a first plate 11 besides a third extending portion 13. Fig.6 is an exploded perspective view of the bus bar illustrated in Fig.5. The configurations other than the above-mentioned configuration are equal to the corresponding configurations of the embodiment 1. with respect to the configurations other than the above-mentioned configuration. Although not illustrated in the drawings, a protrusion 113 for mounting a voltage detection line may be mounted on an extending portion 122 that extends from a second plate 12. Also in this case, ultrasonic welding can be performed for forming the bus bar according to the present invention. The maximum area S2 of the plates in a planar direction can be expressed by an expression S2 = (A + B + C) × D and hence, the embodiment 2 can increase a joining area in the same manner as the embodiment 1.

### Embodiment 3

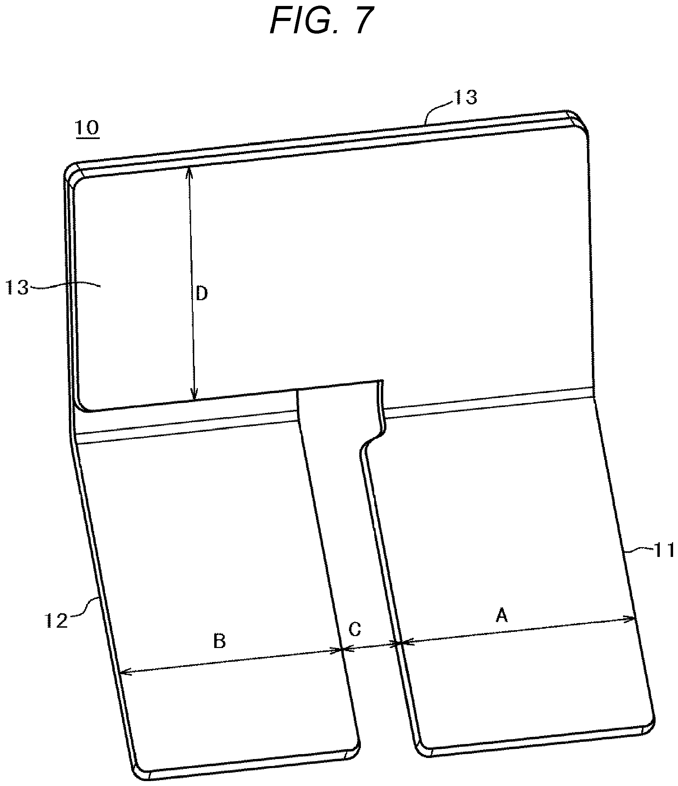

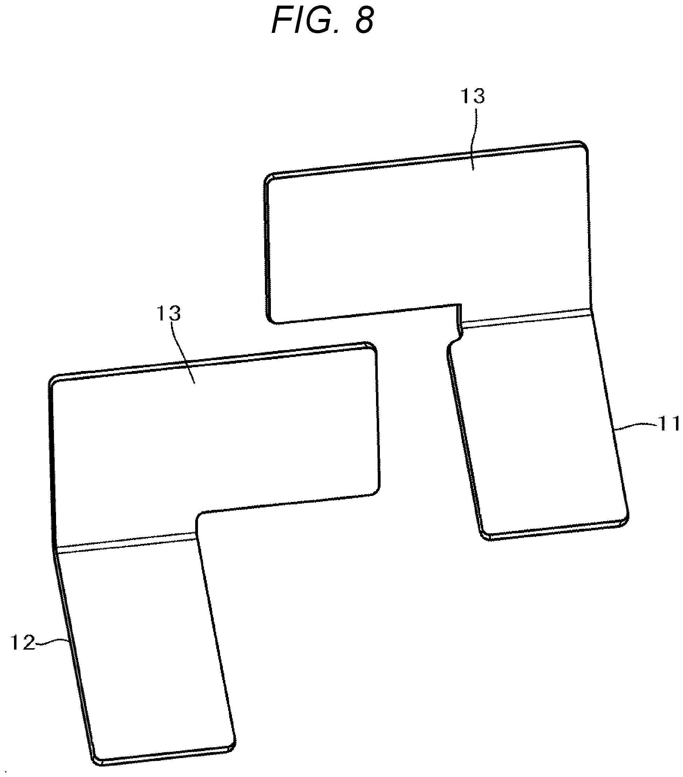

Fig.7 is a perspective view illustrating an embodiment 3. Compared to the configuration described in the embodiment 1, Fig.7 describes the configuration where a first extending portion 112 and a second extending portion 122 that exist in a first plate 11 and a second plate 12 are bent, and a bus bar further includes third extending portions 13 that extend from both of the extending portions 112, 122. Fig.8 is an exploded perspective view of the bus bar illustrated in Fig.7. The configurations other than the above-mentioned configuration are equal to the corresponding configurations of the embodiment 1. Also, ultrasonic welding can be performed in the bus bar 10 according to the embodiment 3. The maximum area S3 of the plates in a planar direction can be expressed by an expression S3 = (A + B + C) × D and hence, the bus bar 10 can obtain a large area. In this case, a bending angle may be any angle provided that the bus bar 10 can be mounted in a module or a pack. In this embodiment, an angle of 45 degrees is set as the bending angle. However, the maximum area in which ultrasonic welding can be performed does not change even in a case that the bending angle is set to 90 degrees. A voltage detection line can be mounted on a portion of the first extending portion 112 or the second extending portion 122 of the bus bar 10 where a USW joining portion is not formed.

### Embodiment 4

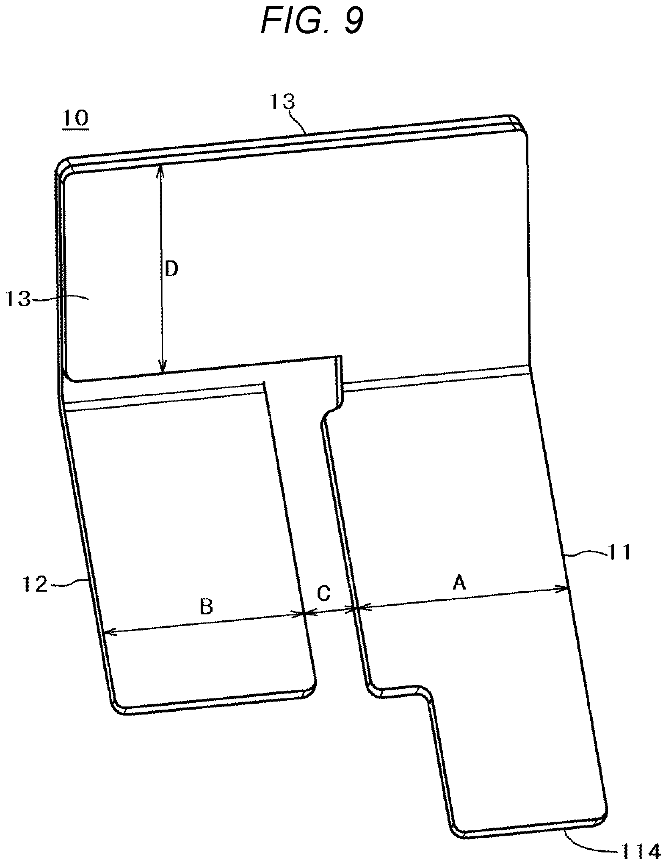

Fig.9 is a perspective view illustrating an embodiment 4. Compared to the configuration described in the embodiment 3, Fig.9 describes the configuration where a protrusion 114 for mounting a voltage detection line is additionally formed on a first plate 11 in a direction opposite to a direction that a first extending portion extends. The configurations other than the above-mentioned configuration are equal to the corresponding configurations of the embodiment 3. Also in the embodiment 4, ultrasonic welding can be performed in the bus bar according to the present invention. The maximum area S4 of the plates in a planar direction can be expressed by an expression S4 = (A + B + C) × D, and hence, the bus bar 10 can obtain a large joining area.

### Embodiment 5

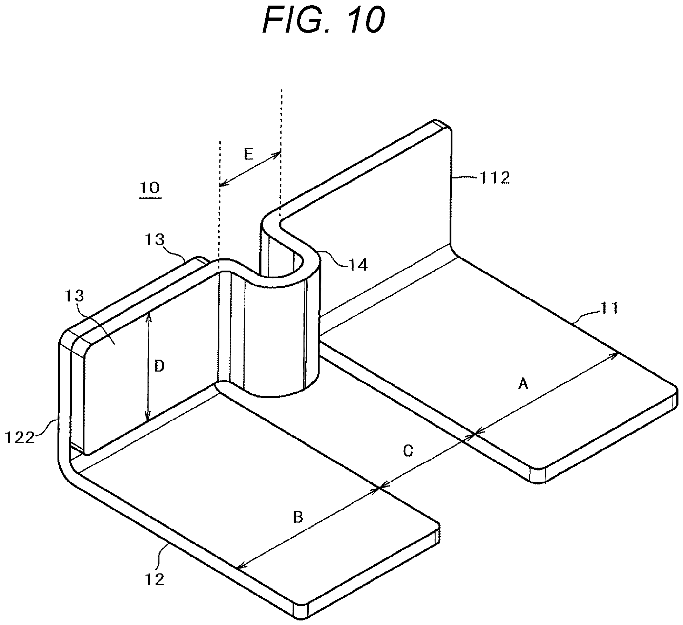

Fig.10 is a perspective view illustrating an embodiment 5. Compared to the embodiment 3, Fig.10 describes the configuration in a case where a first extending portion 112 and a second extending portion 122 that exist in a first plate 11 and a second plate 12 are bent, a bus bar 10 has a third extending portion 13 extending from one of the extending portions 112, 122, and an inch-worm-like bending structure 14 that alleviates a stress is formed on a third extending portion 13. In the embodiment 5, a bending angle of the third extending portion with respect to the first extending portion and the second extending portion is set to 90 degrees. However, even in a case where the bending angle is set to angles other than 90 degrees, the bus bar 10 can acquire substantially the same advantageous effects. The configurations other than the above-mentioned configuration are equal to the corresponding configurations of the embodiment 3. In this case, assume a length of the inch-worm-like bending structure 14 as E, ultrasonic welding can be performed in the bus bar 10 according to the present invention. The maximum area S5 of the plates in a planar direction can be expressed by an expression S5 = (A + C - E) × D or an expression S5 = (B + C - E) × D and hence, the bus bar 10 can obtain a large joining area.

### Embodiment 6

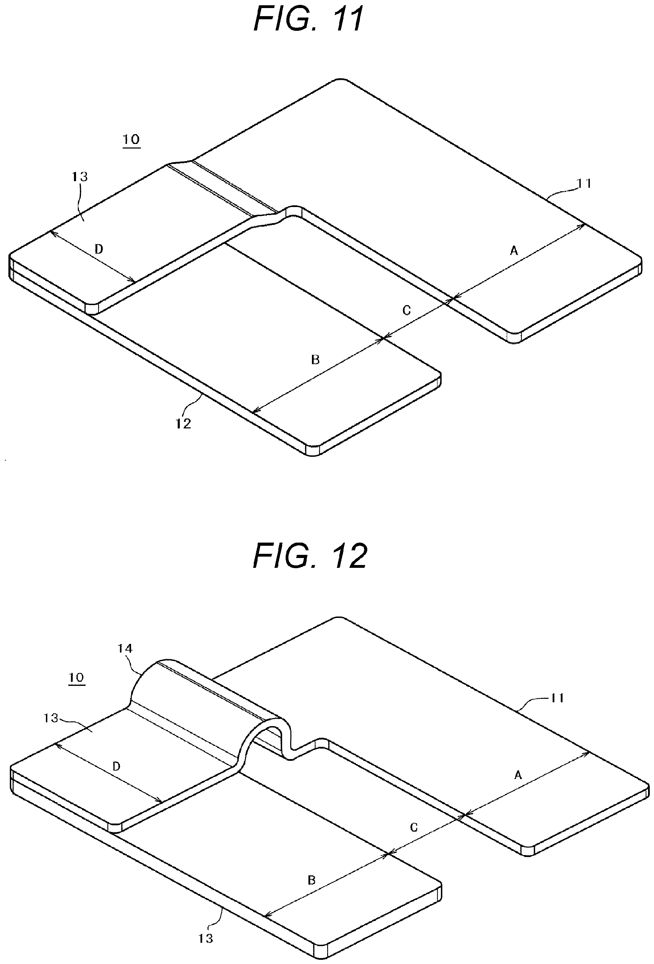

Fig.11 is a perspective view illustrating an embodiment 6. Compared to the configuration described in the embodiment 1, Fig.11 describes the configuration where, as viewed in a plan view, a bus bar 10 has a third extending portion 13 extending in a second direction from one extending portion out of a first extending portion 112 and a second extending portion 122 that exist on a first plate 11 and a second plate 12. The configurations other than the above-mentioned configuration are equal to the corresponding configurations of the embodiment 1. Also in the embodiment 6, ultrasonic welding can be performed in the bus bar 10. The maximum area S6 of the plates in a planar direction can be expressed by an expression S6 = A × D or an expression S6 = B × D and hence, the bus bar 10 can obtain a large joining area.

### Embodiment 7

Fig.12 is a perspective view illustrating an embodiment 7. Compared to the configuration described in the embodiment 1, Fig.12 describes the configuration where a first extending portion 112 and a second extending portion 122 that exist in a first plate 11 and a second plate 12 are bent. A bus bar has a third extending portion 13 that extends from one extending portion out of the first extending portion 112 and the second extending portion 122, an inch-worm-shaped bending structure 14 is formed on a portion of the third extending portion 13. The configurations other than the above-mentioned configuration are equal to the corresponding configurations of the embodiment 1. In this case, ultrasonic welding can be performed in the bus bar according to the present invention. The maximum area S7 of the plates in a planer direction can be expressed by an expression S7 = (A + C - E) × D or an expression S7 = (B + C - E) × D and hence, the bus bar 10 can obtain a large joining area.

### Embodiment 8

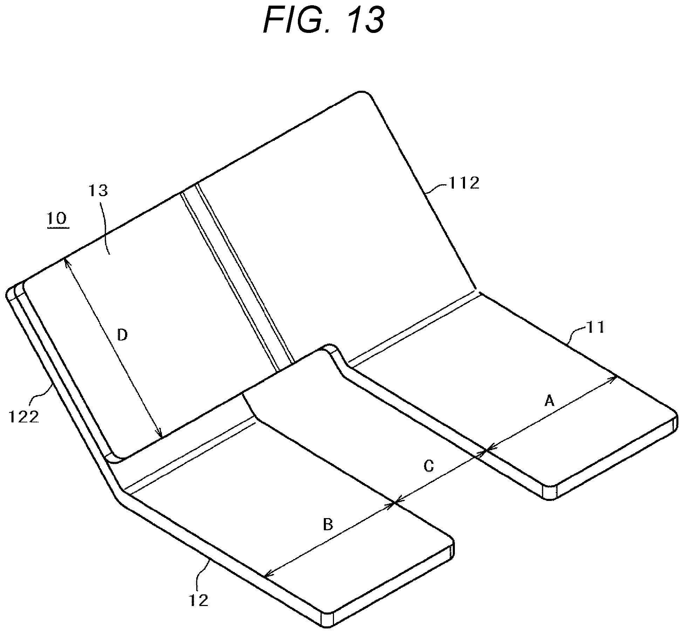

Fig.13 is a perspective view illustrating an embodiment 8. Compared to the embodiment 3, Fig.13 has the configuration in a case where a first extending portion 112 and a second extending portion 122 that exist in a first plate 11 and a second plate 12 are bent, and a bus bar 10 has a third extending portion 13 that extends from one of the first extending portion 112 and the second portion 122. However, even in a case the bending angle is set to angles other than 90 degrees in the embodiment 8, the bus bar 10 can acquire substantially the same advantageous effects. The configurations other than the above-mentioned configuration are equal to the corresponding configurations of the embodiment 3. Also in this case, ultrasonic welding can be performed in the bus bar 10 according to the embodiment 8. The maximum area S8 of the plates in a planar direction can be expressed by an expression S8 = A × D or an expression S8 = B × D and hence, the bus bar 10 can obtain a large joining area.

### Embodiment 9

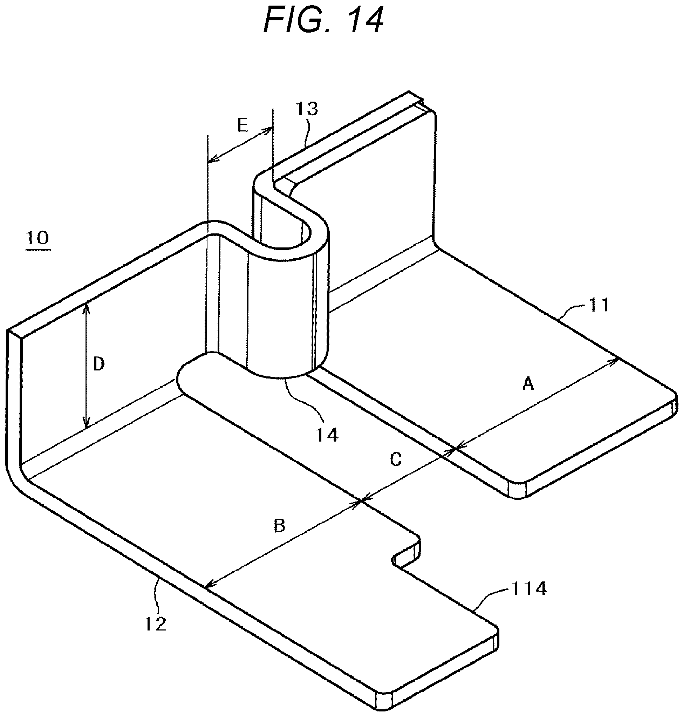

Fig.14 is a perspective view illustrating an embodiment 9. The configuration described in Fig. 14 is characterized by forming a protrusion 114 mounted for voltage detection on one of a first plate 11 and a second plate 12. The configurations other than the above-mentioned configuration are substantially equal to the corresponding configurations described in the embodiment 5. In the embodiment 9, a bending angle of a third extending portion 13 with respect to a first extending portion 112 or a second extending portion 122 is set to 90 degrees. However, even in a case the bending angle is set to angles other than 90 degrees, the bus bar 10 can acquire substantially the same advantageous effects. In this case, assume that a length of an inch-worm-like bending structure 14 is E, ultrasonic welding can be performed in the bus bar according to the present invention. The maximum area S9 of the plates in a planar direction can be expressed by an expression S9 = (A + C - E) × D or an expression S9 = (B + C - E) × D and hence, the bus bar 10 can obtain a large joining area.

### Embodiment 10

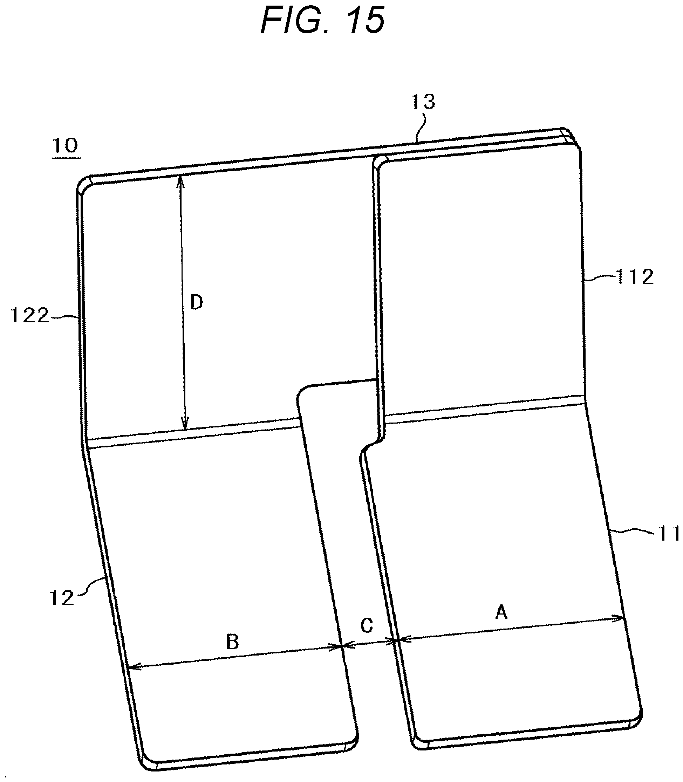

Fig.15 is a perspective view illustrating an embodiment 10. Fig.15 describes the configuration in a case where a first extending portion 112 and a second extending portion 122 that exist in a first plate 11 and a second plate 12 are bent, and a bus bar 10 has a third extending portion 13 that extends from one of the extending portions 112, 122, and the extending portion 13 has the reverse direction compared to the configuration described in the embodiment 8. The direction that a horn and an anvil of USW are brought into contact with the plates may be the direction where the horn is disposed on a first plate 11 side, and the anvil is disposed on a second plate 12 side, or the horn is disposed on a second plate 12 side and the anvil is disposed on a first plate 11 side. In both configurations, it is possible to acquire advantageous effects of the present invention. A bending angle is set to 90 degrees in the embodiment 10. However, even in the case the bending angle is set to angles other than 90 degrees, the bus bar 10 can acquire substantially the same advantageous effects. The configurations other than the above-mentioned configuration are equal to the corresponding configurations of the embodiment 3. Also, in the bus bar 10 according to the embodiment 10, ultrasonic welding can be performed. The maximum area S3 of the plates in a planar direction can be expressed by an expression S3 = (A + B + C) × D and hence, the bus bar 10 can obtain a large joining area.

The above-mentioned respective embodiments are provided for an exemplifying purpose. For example, even in a case where the thickness of the first plate 11 and the thickness of the second plate 12 are changed, the embodiments can acquire advantageous effects of the present invention. Further, the position and the area of the connecting surface of the bus bar 10 can be changed in various values corresponding to the lengths of the respective extending portions 3. Further, on a flat portion of each extending portion, a bent portion, a folded portion or an inclined portion may be additionally formed as desired, or a stepped portion may be formed on. Further, the structures described in the respective embodiments may be combined with each other.

In the present invention, the method of mounting the bus bar and the voltage detection line is not particularly limited. However, for example, ultrasonic welding, laser welding, fastening by screws, crimping or the like can be named. Further, with respect to a structure that is mounted on the bus bar for taking out the voltage detection line, the structure can be disposed at any desired portion of the bus bar unless the structure does not interfere with other parts of the battery pack. The structure may be formed into various shapes.

For example, the structure may be formed as an extending portion that extends in a direction parallel to the plate surface of the bus bar as described in the embodiments, and the structure may be provided as a protrusion structure that protrudes, for example, in a direction perpendicular to the plate surface of the bus bar. The protrusion structure is not limited to a flat-plate-shaped structure, and may be a stereoscopic complicated structure. A voltage detection line may be mounted by mounting a press-fit connector on the protrusion structure. The protrusion structure can adopt a stereoscopic structure as desired in conformity with the size of the press-fit connector and routing of a connector in a battery pack.

The present invention is not limited to the bus bar 10 that connects the lithium ion secondary batteries to each other, and is also applicable to a nickel hydrogen battery or a secondary battery that uses water soluble electrolytic solution such as a nickel cadmium battery or a lead-acid battery. The present invention is also applicable to a bus bar that is connected to an energy storage device such as a lithium ion capacitor or an electrolytic double layer capacitor.

Further, the bus bar 10 for battery pack according to the present invention is applicable in the form of various modifications.

### Reference Signs List

- 1:: battery pack
- 2:: unit battery
- 2a:: positive electrode
- 2b:: negative electrode
- 3:: holder
- 4:: end plate
- 4a:: opening portion
- 5:: side plate
- 5b:: opening portion
- 6:: bolt
- 7:: insulation cover
- 8:: end bus bar
- 10:: bus bar
- 10:: display panel
- 11:: first plate (positive electrode side conductive member)
- 12:: second plate (negative electrode side conductive member)
- 13:: third extending portion
- 14:: inch-worm-like bending structure
- 20:: end portion of electrode terminal
- 30:: joining surface
- 31:: mixed region
- 111:: first joining portion
- 112:: first extending portion
- 113:: first protrusion
- 114:: second protrusion
- 121:: second joining portion
- 122:: second extending portion
- 131:: third joining portion

## Claims

1. A battery pack where a first battery where a first positive electrode terminal and a first negative electrode terminal are disposed at a first distance therebetween in a first direction, and a second battery where a second positive electrode terminal and a second negative electrode terminal are disposed at a second distance therebetween in the first direction are arranged in a second direction that intersects with the first direction, and
the first positive electrode terminal and the second negative electrode terminal are arranged adjacently to each other in the first direction, and a bus bar connects the first positive electrode terminal and the second negative electrode terminal, wherein
a first conductive member of the bus bar includes: a first joining portion that is joined with the first positive electrode terminal; and a first extending portion that extends in the first direction from the first joining portion
the second conductive member of the bus bar includes a second joining portion that is joined with the second negative electrode terminal; and a second extending portion that extends in the first direction from the second joining portion,
the first conductive member and the second conductive member are made of materials differ from each other,
the first conductive member and the second conductive member are connected to each other by a third joining portion,
an end portion of the first extending portion and an end portion of the second extending portion exist in a spaced-apart manner in the first direction from a line that connects the first joining portion and the second joining portion, and
the third joining portion is formed on an overlapping portion of the first extending portion and the second extending portion with a distance closer to the third joining portion out of a distance between the first joining portion and the third joining portion and a distance between the second joining portion and the third joining portion.

2. The battery pack according to claim 1, wherein the first extending portion further includes a third extending portion that extends in the second direction, and
the third joining portion exists in an overlapping portion of the second extending portion and the third extending portion.

3. The battery pack according to claim 1, wherein the second extending portion further includes a fourth extending portion that extends in the second direction, and
the third joining portion exists in an overlapping portion of the first extending portion and the fourth extending portion.

4. The battery pack according to claim 2, wherein the second extending portion further includes a fourth extending portion that extends in the second direction, and
the third joining portion exists in an overlapping portion of the third extending portion and the fourth extending portion.

5. The battery pack according to claim 1, wherein the first conductive member or the second conductive member has a protrusion for voltage detection in the first direction as viewed in a plan view.

6. The battery pack according to any one of claims 2 to 4, wherein a surface on which the third joining portion is formed has an angle with respect to a surface on which the first joining portion and the second joining portion are formed.

7. The battery pack according to any one of claims 1 to 6, wherein the first extending portion and the second extending portion are joined to each other with nickel or a nickel alloy interposed therebetween.

8. The battery pack according to claim 2, wherein the third extending portion has an inch-worm-like bending structure at a place other than a region where the third joining portion is formed.

9. The battery pack according to claim 3, wherein the fourth extending portion has an inch-worm-like bending structure at a place other than a region where the third joining portion is formed.

10. The battery pack according to claim 4, wherein the third extending portion or the fourth extending portion has an inch-worm-like bending structure at a place other than a region where the third joining portion is formed.

11. The battery pack according to claim 1, wherein the first battery and the second battery are each formed of rectangular parallelepiped body, the first positive electrode and the first negative electrode of the first battery are formed on the same surface of the rectangular parallelepiped body, and the second positive electrode and the second negative electrode of the second battery are formed on the same surface of the rectangular parallelepiped body.

12. The battery pack according to claim 1, wherein a plurality of sets each formed of the first battery and the second battery are arranged in the second direction.
